Europäisches Patentamt

European Patent Office

Office européen des brevets

(19)

(11) EP 0 865 138 A1

(12) EUROPÄISCHE PATENTANMELDUNG

(43) Veröffentlichungstag:
16.09.1998 Patentblatt 1998/38

(51) Int. Cl.⁶: **H02J 3/01**, H02M 1/12

(21) Anmeldenummer: 97103946.6

(22) Anmeldetag: 10.03.1997

(84) Benannte Vertragsstaaten:
AT BE CH DE DK ES FI FR GB GR IE IT LI LU MC
NL PT SE
Benannte Erstreckungsstaaten:
AL LT LV RO SI

(71) Anmelder:
SIEMENS AKTIENGESELLSCHAFT
80333 München (DE)

(72) Erfinder:
• Hädrich, Olaf, Dipl.-Ing.
09131 Chemnitz (DE)
• Göpfrich, Kurt, Dipl.-Ing.
91058 Erlangen (DE)

(54) **Verfahren und Schaltungsanordnung zur Wechselspannungsformung**

(57) Vorliegend werden ein Verfahren sowie eine Schaltungsanordnung zur Wechselspannungsformung eines beliebigen Wechselspannungsistverlaufes ($\underline{U}$) in einen beliebigen Wechselspannungssollverlaufs ($\underline{U}_{ref}$) beschrieben, die mittels leistungselektronischer Schaltelemente (A+,A- ...) die in Spannungsüberhöhungen überschüssige Energie in Form eines Stromes ($I_F$) in einem Stromspeicher ($L_F$) speichern und dadurch die durch die Spannungsunterschreitungen fehlende Energie ersetzen. Die leistungselektronischen Schaltelemente werden von einem digitalen Zustandsautomaten (S,S3) durch entsprechende Ansteuerimpulse ($\underline{A},\underline{B}$ ...) so angesteuert, daß keine feste Schaltfrequenz entsteht. Bevorzugtes Anwendungsgebiet ist die aktive Filterung der Spannung eines elektrischen Drehstrom- oder Wechselstromversorgungsnetzes.

FIG 2

EP 0 865 138 A1

**Beschreibung**

Die Erfindung betrifft ein Verfahren zur Wechselspannungsformung eines Wechselspannungsistverlaufes in einen Wechselspannungssollverlauf sowie eine Schaltungsanordnung dazu.

In der Elektrotechnik stellt sich in vielen Anwendungsbereichen das Problem, eine tatsächlich vorliegende Wechselspannung in eine gewünschte Sollwechselspannung zu überführen. Solche Anwendungsgebiete können beispielsweise in der Leistungselektronik, der Niederfrequenzelektronik und der Kommunikationselektronik etc. bestehen.

Bevorzugtes Anwendungsgebiet für solche Verfahren und Schaltungsanordnungen ist die Filterung der Spannungen eines elektrischen Drehstrom- oder Wechselstromversorgungsnetzes, die durch leistungselektronische Geräte und Anordnungen in Folge der schaltenden Bauelemente stark mit Spannungsoberschwingungen behaftet sind. Bekannte Methoden zur Filterung der Netzspannungen von Oberschwingungen betreffen bislang nur Verfahren und Anordnungen basierend auf passiven elektronischen Bauelementen. Aktive Verfahren und Schaltungsanordnungen zur Wechselspannungsformung und Wechselspannungsfilterung sind bisher nur zur Filterung von Oberschwingungen der Netzströme angewendet worden.

Da bislang zur Unterdrückung von Spannungsoberschwingungen nur Filter mit passiven elektrischen Bauelementen eingesetzt wurden, soll ein auf aktiven elektronischen Bauelementen basierendes Verfahren zur Wechselspannungsformung bzw. eine dazu geeignete Schaltungsanordnung geschaffen werden, in dem/der der passive Filteraufwand bzw. die durch diesen verursachten hohen Verluste reduziert werden können.

Dieses Wirkprinzip soll prinzipiell in der Lage sein, an einem Netzanschlußpunkt jede beliebige Wechselspannungsform in jede andere beliebige Wechselspannungsform zu wandeln. Das Anwendungsgebiet dieses Verfahrens bzw. der Schaltungsanordnung soll dadurch in starkem Maße ausdehnbar sein bis in Bereiche hinein, die sich bei weitem nicht nur auf elektrische Versorgungsnetze, leistungselektronische Lasten oder die Beseitigung von Oberschwingungen beschränken.

Aufgabe der vorliegenden Erfindung ist es daher, ein Verfahren bzw. eine Schaltungsanordnung zur Wechselspannungsformung eines Wechselspannungsistverlaufes in einen Wechselspannungssollverlauf zu schaffen, welches für beliebige Spannungsebenen und Frequenzen anwendbar ist.

Gemäß der vorliegenden Erfindung wird diese Aufgabe durch ein Verfahren mit den folgenden Verfahrensschritten gelöst:

1.1 in Abweichungen des Wechselspannungsistverlaufes von dem Wechselspannungssollverlauf enthaltene elektrische Energie wird bei Spannungsüberhöhung einem Stromspeicher zugeführt und bei Spannungsunterschreitung vom Stromspeicher abgegeben,

1.2 indem in Abhängigkeit einer Spannungsüberhöhung oder einer Spannungsunterschreitung Stromrichterventile so angesteuert werden, daß keine feste Schaltfrequenz entsteht, wobei Ansteuerimpulse gewonnen werden,

1.3 indem mindestens ein Spannungsistwert und ein im Stromspeicher fließender Strom bestimmt werden,

1.4 durch Aufbereitung des/der bestimmten Spannungsistwerte diesem/diesen zugeordnete dem Wechselspannungssollverlauf entsprechende Spannungssollwerte generiert werden,

1.5 ein Faktor zur Konditionierung des/der Spannungssollwerte in Abhängigkeit des im Stromspeicher fließenden Stromes bereitgestellt wird,

1.6 anhand von Abweichungen des/der konditionierten Spannungssollwerte von dem/den Spannungsistwerten mittels logischer Operationen die jeweiligen Ansteuerimpulse für die zugeordneten Stromrichterventile bereitgestellt werden.

Auf diese Weise kann eine Anpassung jeder beliebigen vorhandenen Wechselspannungform an jede andere gewünschte Wechselspannungsform erreicht werden, wobei nur geringe Oberschwingungen durch hohe Schaltfrequenzen erzeugt werden. Darüber hinaus wird das Spektrum der Istspannungen verrauscht, so daß keine Resonanzstelle in der Nähe der Schaltfrequenz entsteht.

Eine erste vorteilhafte Ausgestaltung des Verfahrens gemäß der vorliegenden Erfindung ist durch folgenden weiteren Verfahrensschritt gekennzeichnet:

2.1 es werden stets mindestens ein positives und ein negatives Stromrichterventil gleichzeitig eingeschaltet.

Dadurch wird erreicht, daß der im Stromspeicher fließende Strom nicht abreißt und die dadurch bedingte Überspannung die Stromrichterventile zerstört.

In einer weiteren vorteilhaften Ausgestaltung des Verfahrens gemäß der vorliegenden Erfindung wird darüber hinaus garantiert, daß der im Stromspeicher vorhandene Strom einen Maximalwert nicht überschreitet, so daß der Stromspeicher stets in einem linearen Betriebsbereich bleibt. Dies wird durch den folgenden weiteren Verfahrensschritt erreicht:

3.1 der durch den Stromspeicher fließende Strom wird auf Überschreitung eines maximal zulässigen Stromes überwacht und im Falle einer Überschreitung wird der durch den Stromspeicher fließende Strom durch eine Vergrößerung des Faktors zur Konditionierung begrenzt.

In einer weiteren vorteilhaften Ausgestaltung des Verfahrens gemäß der vorliegenden Erfindung wird darüber hinaus erreicht, daß bei einer darüber hinausgehenden Erhöhung des im Stromspeicher vorliegenden Stromes dieser Strom schnell und ausreichend reduziert werden kann. Dies geschieht durch den folgenden weiteren Verfahrensschritt:

4.1 bei einer erheblichen Überschreitung des maximal zulässigen Stromes im Stromspeicher werden die Ansteuerimpulse für die Stromrichterventile invertiert oder zwei komplementäre Stromrichterventile gleichzeitig eingeschaltet.

In einer weiteren vorteilhaften Ausgestaltung des Verfahrens gemäß der vorliegenden Erfindung wird darüber hinaus erreicht, daß ein Abfall der Betriebsspannung so rechtzeitig erkannt wird und darauf reagiert wird, daß ein im Stromspeicher vorhandener Strom vor Ausfall oder Abschaltung zu Null kompensiert wird. Dies geschieht durch folgenden weiteren Verfahrensschritt:

5.1 bei einer Unterschreitung eines minimal zulässigen Wertes durch die Betriebsspannung werden zwei komplementäre Stromrichterventile gleichzeitig eingeschaltet.

In einer weiteren vorteilhaften Ausgestaltung des Verfahrens gemäß der vorliegenden Erfindung wird eine besonders vorteilhafte Möglichkeit geschaffen, zum Wechselspannungsistverlauf phasensynchronisierte Spannungssollwerte zu generieren. Dies geschieht durch den folgenden weiteren Verfahrensschritt:

6.1 zur Generierung entsprechender Spannungssollwerte werden die zugeordneten Spannungsistwerte geglättet, um einen festen Phasenwinkel gedreht und mittels Bestimmung der Nulldurchgänge der Spannungsistwerte mit diesen phasensynchronisierte Spannungssollwerte abgeleitet.

In einer weiteren vorteilhaften Ausgestaltung des Verfahrens gemäß der vorliegenden Erfindung wird eine besonders vorteilhafte Möglichkeit der Speicherung bzw. zur Abgabe von überschüssiger bzw. fehlender Energie in dem Stromspeicher geschaffen. Dies geschieht durch folgende weitere Verfahrensschritte:

7.1 Die Istwechselspannung wird zu einem Element oder einer Gruppe von Elementen zur Speicherung der Wechselspannung geführt,
7.2 die in dem Element oder der Gruppe von Elementen im Falle einer Spannungsüberhöhung gespeicherte überschüssige Energie wird durch einen über die Stromrichterventile in einen Gleichstrom gewandelten Wechselstrom in einem Gleichstromspeicherelement zwischengespeichert und die im Falle einer Spannungsunterschreitung fehlende Energie an das Element oder die Gruppe von Elementen abgegeben.

Ein besonders bevorzugtes Anwendungsgebiet des Verfahrens gemäß der vorliegenden Erfindung liegt in einer aktiven Filterung von Wechselspannungen, wobei als Wechselspannungssollverlauf der ideale ungestörte Verlauf der Wechselspannung zugrundegelegt wird.
Ein diesbezüglich besonders bevorzugtes Anwendungsgebiet ist die Filterung der Spannungen eines elektrischen Drehstrom- oder Wechselstromversorgungsnetzes, die durch leistungselektronische Geräte und Anordnungen in Folge der schaltenden Bauelemente stark mit Oberschwingungen behaftet sind. Auch hierbei wird als Wechselspannungssollverlauf der ideale ungestörte Verlauf der vom Wechselstromversorgungsnetz zu liefernden Wechselspannung zugrundegelegt.
Desweiteren wird gemäß der vorliegenden Erfindung eine Schaltungsanordnung zur Wechselspannungsformung eines Wechselspannungsistverlaufes in einen Wechselspannungssollverlauf geschaffen, welche zur Durchführung des vorangehenden dargestellten Verfahrens geeignet ist und somit ebenfalls die Aufgabe der vorliegenden Erfindung löst. Eine solche Schaltungsanordnung besitzt die selben Vorteile wie das zugrundeliegende Verfahren und ist durch folgende Merkmale gekennzeichnet:

10.1 mindestens einem Stromspeicher zur Aufnahme von in Abweichungen des Wechselspannungsistverlaufes von dem Wechselspannungssollverlauf enthaltener elektrische Energie bei Spannungsüberhöhung und zur Abgabe dieser Energie bei Spannungsunterschreitung,
10.2 Stromrichterventilen, welche durch zugeordnete Ansteuerimpulse in Abhängigkeit einer Spannungsüberhöhung oder einer Spannungsunterschreitung so ansteuerbar sind, daß keine feste Schaltfrequenz entsteht,

10.3 Mitteln zur Bestimmung von mindestens einem Spannungsistwert und einem im Stromspeicher fließenden Strom,

10.4 Mitteln zur Generierung von dem Wechselspannungssollverlauf entsprechenden zugeordneten Spannungssollwerten durch Aufbereitung des/der bestimmten Spannungsistwerte,

10.5 Mitteln zur Bereitstellung eines Faktors zur Konditionierung des/der Spannungssollwerte in Abhängigkeit des im Stromspeicher fließenden Stromes,

10.6 Mitteln zur Bereitstellung von jeweiligen Ansteuerimpulsen für die zugeordneten Stromrichterventile anhand von Abweichungen des/der konditionierten Spannungssollwerte von dem/den Spannungsistwerten mittels logischer Operationen.

Eine besonders vorteilhafte Ausgestaltung der Schaltungsanordnung gemäß der vorliegenden Erfindung besteht in einem aktiven Filter, wobei als Wechselspannungssollverlauf der ideale ungestörte Verlauf der Wechselspannung zugrundegelegt ist.

In einer weiteren vorteilhaften Ausgestaltung der Schaltungsanordnung gemäß der vorliegenden Erfindung wird ein aktives Filter zur Filterung der Wechselspannung eines elektrischen Drehstrom- oder Wechselstromversorgungsnetzes geschaffen, wobei die einzelnen aktiven und passiven elektronischen Bauelemente durch besonders vorteilhafte Varianten ausgeführt sind. Dies wird dadurch erreicht, daß der Stromspeicher als induktiver Speicher, die Stromrichterventile als Transistoren und die Mittel zur Generierung von Spannungssollwerten, zur Bereitstellung eines Konditionierfaktors sowie zur Bereitstellung von jeweiligen Ansteuerimpulsen als Logikschaltkreise und/oder anwenderspezifizierter Logikschaltkreis und/oder ein geeignet programmierter Mikroprozessor oder Signalprozessor ausgeprägt sind.

Das Verfahren und die Schaltungsanordnung zur aktiven Filterung der Spannungen eines elektrischen Drehstrom- oder Wechselstromversorgungsnetzes besitzen darüber hinaus die Vorteile, daß der im Stromspeicher gespeicherte Filterstrom geregelt werden kann, daß durch geeignete Parametrierung und Dimensionierung der elektronischen Bauelemente die Harmonische festgelegt werden kann, ab der der aktive Filter wirken soll und daß eine automatische Adaption an weltweit übliche Ein- oder Dreiphasen-Versorgungsnetze bezüglich der Spannung, der Frequenz, des Drehsinns (bei Dreiphasen-Systemen) und des Betriebsmodus (Ein- oder Rückspeise-Betrieb) möglich sind.

Weitere Vorteile und Einzelheiten gemäß der vorliegenden Erfindung ergeben sich aus zwei im folgenden beschriebenen vorteilhaften Ausführungsbeispielen sowie in Verbindung mit den Figuren. Soweit in den Figuren Elemente die gleiche Funktionalität besitzen, sind sie mit gleichen bzw. einheitlichen Bezugszeichen gekennzeichnet. Solche gleich gekennzeichnete Elemente sind daher nicht zwangsläufige dieselben. Es zeigen:

FIG 1    den Leistungsteil eines aktiven Filters für Einphasen-Wechselspannungssysteme,
FIG 2    den Leistungsteil eines aktiven Filters für Dreiphasen-Wechselspannungssysteme,
FIG 3    einen Steuerteil eines aktiven Filters für Einphasen-Wechselspannungssysteme und
FIG 4    einen Stuerteil eines aktiven Filters für Dreiphasen-Wechselspannungssysteme.

Da sich das Verfahren bzw. die Schaltungsanordnung zur Wechselspannungsformung eines Wechselspannungsistverlaufes in einen Wechselspannungssollverlauf gemäß der vorliegenden Erfindung besonders vorteilhaft auf das Anwendungsgebiet der Filterung der Spannungen eines elektrischen Drehstrom- oder Wechselstromversorgungsnetzes anwenden läßt, werden die nun folgenden Ausführungsbeispiele für dieses bevorzugte Anwendungsgebiet geschildert. Dabei sei jedoch nochmals darauf hingewiesen, daß das Verfahren bzw. die Schaltungsanordnung gemäß der vorliegenden Erfindung zur Wechselspannungsformung eines beliebigen Wechselspannungsistverlaufes in einen beliebigen Wechselspannungssollverlauf auch in anderen Anwendungsgebieten der Elektrotechnik/Elektronik gleichermaßen vorteilhaft geeignet sind.

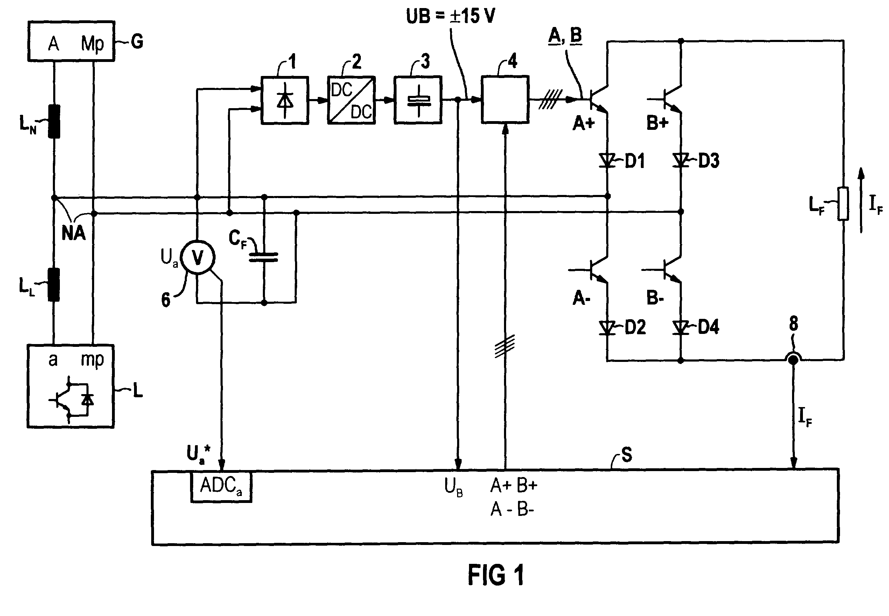

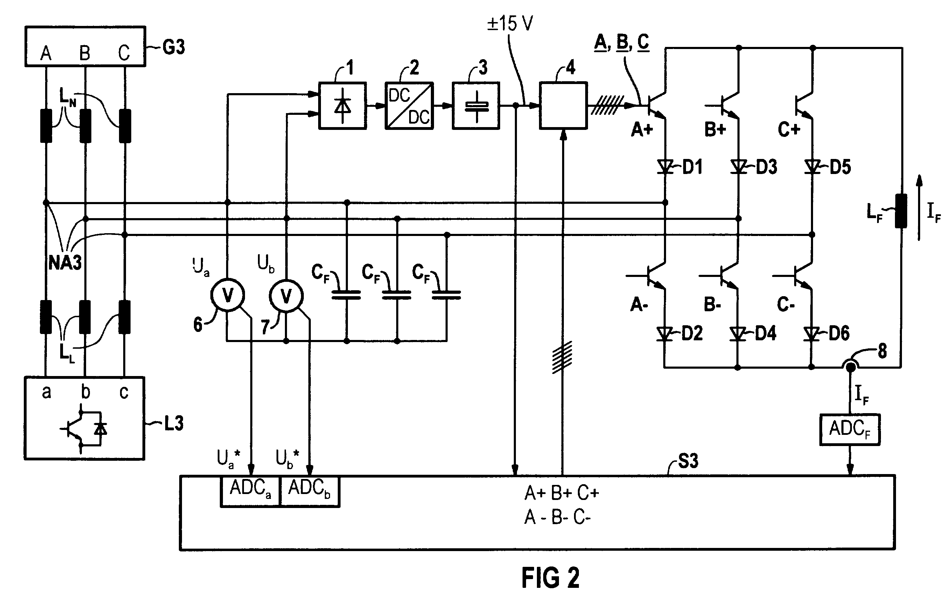

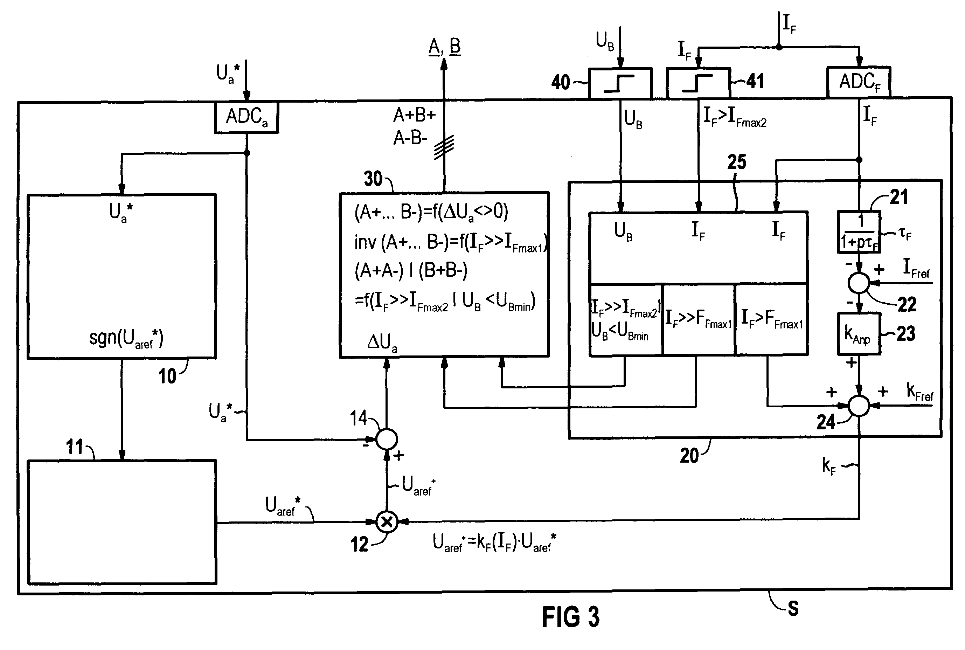

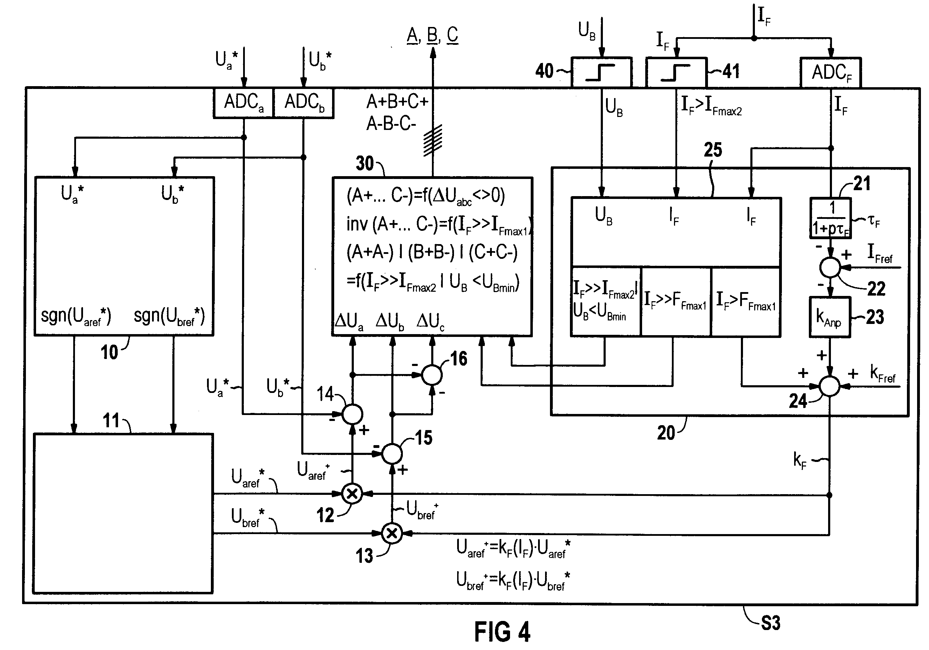

Bei der nun folgenden Beschreibung zweier vorteilhafter Ausführungsbeispiele zur aktiven Filterung der Spannungen eines Wechselstromversorgungsnetzes (erstes Ausführungsbeispiel FIG 1 und FIG 3) und eines elektrischen Drehstromversorgungsnetzes (zweites Ausführungsbeispiel, FIG 2 und FIG 4) wird daher der Wechselspannungssollverlauf als der ideale ungestörte Verlauf der Wechselspannung des Wechselstromversorgungsnetzes bzw. Drehstromversorgungsnetzes zugrundegelegt.

Nachfolgend beschrieben werden somit ein Verfahren und eine dazugehörige Schaltungsanordnung, welche mittels leistungselektronischer Schaltelemente die in den Spannungsüberhöhungen (d.h. Überhöhungen der Netzistspannung gegenüber einem Sollwert) überschüssige Energie in Form eines Stromes in einer Induktivität speichert und dadurch die durch Spannungsunterschreitungen in der/den anderen Phasen fehlende Energie ersetzt. Da es sich hierbei um das Anwendungsgebiet eines aktiven Filters handelt, wird nachfolgend der Begriff "Filter" einheitlich für das Verfahren und die Schaltungsanordnung gemäß der vorliegenden Erfindung verwendet. Das vorgestellte Filter arbeitet an Einphasen-Wechselspannungssystemen (FIG 1) sowie auch an nullkomponentenfreien Dreiphasen-Wechselspannungssystemen (FIG 2).

Ein Einphasen-Wechselspannungssystem hat allgemein die Struktur gemäß der Darstellung in FIG 1. Dabei sind ein oder mehrere Einspeisepunkte für elektrische Energie, welche in der Darstellung gemäß FIG 1 anhand des Generators G gekennzeichnet sind, mit einem Netzanschlußpunkt NA gekoppelt. Als Netzanschlußpunkt NA wird dabei der Punkt bezeichnet, an dem das Filter an das Versorgungsnetz angeschlossen wird. Mit diesem Punkt sind ein oder mehrere Lastpunkte L verbunden. Ein elektrisches Versorgungsnetz ist darüber hinaus durch parasitäre und/oder zusätzliche Induktivitäten gekennzeichnet, welche in den Darstellungen gemäß FIG 1 als Netzinduktivität $L_N$ bzw. Lastinduktivität $L_L$ bezeichnet sind. Diese Induktivitäten entkoppeln die Spannungen am Netzanschlußpunkt NA gegenüber den Einspeisepunkten G und Lastpunkten L. Dies erlaubt eine Spannungsform am Netzanschlußpunkt NA, welche von denen davor oder danach abweicht. Für das in der Darstellung gemäß FIG 1 gezeigte Einphasen-Wechselspannungssystem ist die Netzinduktivität $L_N$ in der Netzphase A auf Generatorseite G, die Lastinduktivität $L_L$ auf der Lastseite L mit a gekennzeichneten Phase angesiedelt. Die im Einphasen-Wechselspannungssystem vorliegende zweite Phase, der Nulleiter, ist auf Generatorseite G mit Mp auf der Lastseite L mit mp gekennzeichnet.

Das in der Darstellung gemäß FIG 2 gezeigte Dreiphasen-Wechselspannungssystem ist nullkomponentenfrei und unterscheidet sich von der Darstellung gemäß FIG 1 lediglich durch die von einem Drehstromgenerator G3 ausgehenden drei Phasen A, B und C mit jeweils vorhandenen Netzinduktivitäten $L_N$ und auf der Lastseite L3 den dort a, b und c bezeichneten Phasen zugeordneten Lastinduktivitäten $L_L$. Während in der Darstellung gemäß FIG 1 für das Einphasen-Wechselspannungssystem der Netzanschluß NA an die beiden Phasen A und Mp bzw. a und mp erfolgt, ist der Netzanschluß NA3 der Darstellung gemäß FIG 2 für ein Dreiphasen-Wechselspannungssystem an die drei Phasen A, B, C bzw. a, b, c geschaltet.

Fließt elektrische Energie im Mittel von den Einspeisepunkten G bzw. G3 zu den Lastpunkten L bzw. L3, so wird dieser Modus als "Einspeisebetrieb" des Versorgungsnetzes bezeichnet. Der umgekehrte Fall wird als "Rückspeisebetrieb" bezeichnet. Weiterhin werden nachfolgend die Matrix aller Netzistspannungsvektoren mit $\underline{U} = (\underline{U}_a)$ bei einphasigen Systemen bzw. $\underline{U} = (\underline{U}_a, \underline{U}_b, \underline{U}_c)$ bei dreiphasigen Systemen, und die aller Netzsollspannungsvektoren mit $\underline{U}_{ref} = (\underline{U}_{aref})$ bei einphasigen Systemen bzw. $\underline{U}_{ref} = (\underline{U}_{aref}, \underline{U}_{bref}, \underline{U}_{cref})$ bei dreiphasigen Systemen bezeichnet.

Die vorhandenen Istspannungen $\underline{U}$ am Netzanschlußpunkt NA bzw. NA3 stellen sich in der Regel so dar, daß die Beträge ihrer Augenblickswerte von den Beträgen ihrer Augenblickswerte der gewünschten Sollspannungen $\underline{U}_{ref}$ abweichen. Die Matrix der Vektoren der Abweichungen wird bei einphasigen Systemen durch $\Delta\underline{U} = (\Delta\underline{U}a)$ bzw. bei dreiphasigen Systemen durch $\Delta\underline{U} = (\Delta\underline{U}_a, \Delta\underline{U}_b, \Delta\underline{U}_c)$ bezeichnet. Eine positive Abweichung einer Spannung $\Delta U = U_{ref} - U > 0$ wird als Spannungsunterschreitung, eine negative Abweichung einer Spannung $\Delta U = U_{ref} - U < 0$ als Spannungsüberhöhung bezeichnet.

Der Filter besteht zum einen aus einer Gruppe von Elementen zur Speicherung der Netzspannung, welche vorteilhafterweise als Kapazitäten ausgebildet sind. Diese werden nachfolgend mit $C_F$ bezeichnet. Über diesen Kapazitäten $C_F$ fällt somit die Netzistwertspannung $\underline{U}$ ab. Für das in der Darstellung gemäß FIG 1 dargestellte Einphasen-Wechselspannungssystem ist somit eine zwischen den Netzanschlußpunkt NA geschaltete Kapazität $C_F$ notwendig, für das in der Darstellung gemäß FIG 2 gezeigte Dreiphasen-Wechselspannungssystem sind in Sternschaltung entsprechend drei Kapazitäten $C_F$ am Netzanschlußpunkt NA3 zwischen die Netzphasen A, B, C bzw. a, b, c geschaltet. Die in den Netzspannungsüberhöhungen gespeicherte überschüssige Energie bzw. die in den Netzspannungsunterschreitungen fehlende Energie wird nun durch einen Einphasen-Wechselstrom bei einphasigen Systemen bzw. einen Dreiphasen-Wechselstrom bei dreiphasigen Systemen ausgeglichen, welcher über leistungselektronische Schaltelemente in einen Gleichstrom $I_F$ gewandelt und in einen Gleichstromspeicherelement, bevorzugterweise einem induktiven Stromspeicher $L_F$ zwischengespeichert wird.

Als leistungselektronische Schaltelemente bzw. Stromrichterventile sind beispielsweise zwei einer jeden Phase zugeordnete komplementäre Transistoren A+, A- bzw. B+, B- und für das dreiphasige System C+, C- vorgesehen. Jedem dieser Stromrichterventile A+, A-, B+ ... ist jeweils eine Diode D1 bis D6 emitterseitig in Reihe nachgeschaltet, welche dem Schutz der Transistoren vor negativer Kollektor-Emitter-Spannung $U_{CE}$ dient. Diese Dioden D1 bis D6 verursachen, daß immer nur in einem negativen und in einem positiven Zweig ein Strom $I_F$ fließt. Nachfolgend wird dieser Gleichstrom als Filterstrom $I_F$ und das Gleichstromspeicherelement als Filterinduktivität $L_F$ bezeichnet. Die Filterinduktivität $L_F$ dient somit als Energiespeicher für die Spannungs-Zeit-Flächen zwischen $\underline{U}$ und $\underline{U}_{ref}$. Besonders günstig ist es, wenn die Filterinduktivität lineares Verhalten aufweist. Ihre Auslegung erfolgt in Abhängigkeit des Einsatzes und der zu berücksichtigten harmonischen des Filters.

Jede Komplementärschaltung der Stromrichterventile A+, A-, B+, B- bei einphasigen Systemen und A+, A-, B+, B-, C+, C- bei dreiphasigen Systemen ist mit dem jeweiligen Verbindungspunkt der zueinander komplementären Stromrichterventile über den Netzanschlußpunkt NA bzw. NA3 an die jeweils zugehörige Netzphase geführt. Die Filterinduktivität $L_F$ ist zwischen die kollektorseitig miteinander verschaltenen Stromrichterventile A+, B+ ... des positiven Zweiges und die emitterseitig miteinander verschalteten Stromrichterventile A-, B-, ... des negativen Zweiges geschaltet. Die als Stromrichterventile zur Verwendung gelangenden Transistoren garantieren die Kommutierung des Filterstromes $I_F$ und somit den Abbau von Spannungsüberhöhungen bzw. die Kompensation von Spannungsunterschreitungen. Als Transistoren einsetzbar sind beispielsweise schnelle IGBT-Transistoren (IGBT = Insulated Gate Bipolar Transistor) oder MOSFET-Transistoren (MOSFET = Metal-Oxide-Semiconductor-Field-Effect-Transistor). Eventuell zusätzlich vorhandene antiparallele Emitter-Kollektor-Dioden, wie bei Leistungstransistoren üblich, sind nicht störend. Die Matrix der den Stromrichterventilen A+, A-, B+ ... zugehörigen Ansteuerimpulse wird mit ($\underline{A}$, $\underline{B}$) bei einphasigen Systemen gemäß der Darstellung nach FIG 1 und mit ($\underline{A}$, $\underline{B}$, $\underline{C}$) bei dreiphasigen Systemen gemäß der Darstellung nach FIG 2 bezeichnet. Solche Ansteuerimpulse werden durch einen Treiber 4 bereitgestellt, welcher durch einen im nachfolgenden näher erläuterten Steuerteil S bzw. S3 angesteuert wird. Die Tatsache, daß bei Einphasen-Wechselspannungssystemen, wie in der Darstellung gemäß FIG 1 dargestellt, lediglich vier Ansteuerimpulse für die vier Stromrichterventile A+, A-, B+, B- benötigt werden, wird durch eine entsprechende Kennzeichnung des von der Treiberstufe 4 ausgehenden Signales verdeutlicht. Der besseren Übersichtlichkeit halber ist lediglich das Ansteuersignal für das Stromrichterventil A+ gezeigt. Für ein Dreiphasen-Wechselspannungssystem, wie in der Darstellung gemäß FIG 2 dargestellt, sind entsprechend sechs Ansteuerimpulse für die sechs Stromrichterventile A+, A-, B+, B-, C+, C- notwendig, was ebenfalls durch eine entsprechende Kennzeichnung des von der Treiberstufe ausgehenden Signals verdeutlicht ist. Der besseren Übersichtlichkeit halber ist ebenfalls nur das Ansteuersignal für das Stromrichterventil A+ gezeigt.

Die Betriebsspannung $U_B$ für die Treiberstufe 4 und den im nachfolgenden näher erläuterten Steuerteil S bzw. S3 wird durch Ableitung einer Gleichspannung durch entsprechende Funktionsglieder 1, 2, 3 aus mindestens zwei Phasen des Wechselspannungs- bzw. -Drehstromsystemes bereitgestellt. Die Funktionsstufen können beispielsweise aus einem Gleichrichter 1, einem Spannungswandler 2 und einem Stabilisierungskondensator 3 bestehen. Selbstverständlich sind alle sonst dem Fachmann geläufigen Verfahren und Vorrichtungen zur Ableitung einer Gleichspannung gleichermaßen anwendbar.

Bei Spannungsüberhöhung ($U > U_{ref}$) in einer oder zwei Phasen (d.h. bei Spannungsunterschreitung in mindestens einer anderen Phase) wird/werden das/die Ventil(e) A-, B- oder C- der Phase(n) mit Spannungsüberhöhung sowie das/die Ventil(e) A+, B+ oder C+ der Phase(n) mit Spannungsunterschreitung dauerhaft eingeschaltet. Die in der Spannungsüberhöhung gespeicherte Energie wird durch einen Stromfluß $I_F$ über die Stromrichterventile A- bzw. B- bzw. C-, die Filterinduktivität $L_F$ A+ bzw. B+ bzw. C+ in der Filterinduktivität $L_F$ gespeichert bzw. es werden Spannungsunterschreitungen damit kompensiert. Eine Spannungsabweichung $\Delta U_a$ bei einphasigen Systemen bzw. die Verhältnisse der Spannungsabweichungen $\Delta U_a$, $\Delta U_b$, $\Delta U_c$ zueinander bei dreiphasigen Systemen definieren einen Spannungszustand. Es gibt bei einphasigen Systemen zwei und bei dreiphasigen Systemen sechs sinnvolle Spannungszustände. Jedem solchen Spannungszustand $\Delta \underline{U}$ ist eindeutig ein Schaltzustand der Stromrichterventile ($\underline{A}, \underline{B}$) bei einphasigen Systemen bzw. ($\underline{A}, \underline{B}, \underline{C}$) bei dreiphasigen Systemen zugeordnet.

Zur Anpassung des vorhandenen Wechselspannungsistverlaufes $\underline{U}$ am Netzanschlußpunkt NA bzw. NA3 an den gewünschten Wechselspannungssollverlauf $\underline{U}_{ref}$ steuert eine geeignete Vorrichtung, welche nachfolgend als Steuerteil S bzw. S3 im Falle von Dreiphasensystemen bezeichnet ist, die Stromrichterventile A+, A-, B+..., indem geeignete Ansteuerimpulse ($\underline{A}, \underline{B}$) bei einphasigen Systemen bzw. ($\underline{A}, \underline{B}, \underline{C}$) bei dreiphasigen Systemen erzeugt werden. Diese Ansteuerimpulse werden so erzeugt, daß in Abhängigkeit des vorhandenen Spannungszustandes $\Delta \underline{U}$ der zugehörige Schaltzustand ($\underline{A}, \underline{B}$) bzw. ($\underline{A}, \underline{B}, \underline{C}$) berechnet und die entsprechenden Stromrichterventile ein- bzw. ausgeschaltet werden.

Ein solcher Steuerteil S ist in der Darstellung gemäß FIG 1 für Einphasen-Wechselspannungssysteme in Form eines Schaltblockes gekennzeichnet. Details des Steuerteiles S sind in der Darstellung gemäß FIG 3 gezeigt. Ebenso ist für den in der Darstellung gemäß FIG 2 gezeigten Leistungsteil für Dreiphasen-Wechselspannungssysteme der mit S3 bezeichnete Steuerteil in der Darstellung gemäß FIG 4 näher spezifiziert.

Der Wechsel von einem Schaltzustand in einen anderen wird einerseits ausgelöst durch einen Wechsel zwischen zwei Spannungszuständen. Andererseits wird zur Einhaltung minimaler Schaltzeiten der Stromrichterventile die minimale Schaltzeit $T_{min}$ berücksichtigt, die von der maximal zulässigen Schaltfrequenz $f_{max}$ der Stromrichterventile abhängig ist. Der Wechsel zwischen zwei Schaltzuständen erfolgt, wenn sowohl ein Wechsel der Spannungszustände $\Delta \underline{U}$ auftritt als auch die minimale Schaltzeit $T_{min}$ seit der letzten Umschaltung vergangen ist.

Da der Wechselspannungsistverlauf $\underline{U}$ verrauscht ist, ist ein Wechsel der Spannungszustände eine zufallsbehaftete Größe. Somit ist auch der Wechsel der Schaltzustände ebenfalls zufallsabhängig. Aus diesem Grund existiert auch keine feste Schaltfrequenz der Stromrichterventile im System, weshalb im Spektrum von $\underline{U}$ keine zusätzliche Resonanzstelle in der Nähe der Schaltfrequenz auftritt. Das Spektrum ist in diesem Bereich mit geringen Amplituden verrauscht. Da außerdem $T_{min}$ bei jedem Schaltzustand abgewartet wird, entsteht ein Tastverhältnis der Stromrichterventile von ca. 0,5 (je nach Zufälligkeit des Wechselspannungsistverlaufes $\underline{U}$). Dies gestattet eine weitere Erhöhung der maximal zulässigen Schaltfrequenz $f_{max}$ der Stromrichterventile und somit eine Verbesserung der Güte von $\underline{U}$.

Der in der Darstellung gemäß FIG 3 für ein einphasiges System bzw. FIG 4 für ein dreiphasiges System gezeigte Steuerteil S bzw. S3 realisiert einen solchen Zustandsautomaten. Darin wird sichergestellt, daß im Gegensatz zu den üblichen Ansteuerungen leistungselektronischer Schalter, bei jedem Schaltzustandswechsel ($I_F$-Kommutierung von einem Stromrichterventilpaar in das nächste) mindestens zwei Stromrichterventile A+, A-, B+ ... gleichzeitig eingeschaltet sind.

Zur Ermittlung des aktuellen Spannungsistzustandes sind zunächst die Istspannungen $\underline{U}^* = (\underline{U}^*_a)$ bei einphasigen Systemen bzw. $\underline{U}^* = (U^*_a, U^*_b)$ oder zwei andere Phasenspannungen bei dreiphasigen Systemen zu messen und zu digitalisieren. Bei einphasigen Systemen nach der Darstellung gemäß FIG 1 ist die Spannung $U^*_a$ direkt über der Kapazität $C_F$ meßbar. Dies geschieht in der Darstellung gemäß FIG 1 durch eine Spannungsmeßeinheit 6, insbesondere ein Voltmeter. Bei dreiphasigen Systemen gemäß der Darstellung nach FIG 2 besteht einerseits die Möglichkeit zwei oder drei Istspannungen als Strangspannungen $(U^*_a, U^*_b)$ bezogen auf einen virtuellen Sternpunkt zu messen. Diese Methode kann bei Sternschaltung der drei Filterkapazitäten $C_F$ bevorzugt werden. Eine solche Vorgehensweise ist auch in der Darstellung gemäß FIG 2 gewählt, indem durch zwei Spannungsmeßeinheiten 6 und 7, insbesondere Voltmeter, die Strangspannungen $U^*_a$, $U^*_b$ gemessen werden. Andererseits können die drei Filterkapazitäten $C_F$ auch in Dreiecksschaltung verschaltet werden. Dann können nur zwei verkettete Spannungen $U^*_{ab}$, $U^*_{bc}$ gemessen werden. Diese müssen dann über eine Rechenstufe nach den Beziehungen

$$|U_a| = -(2|U_{ab}| + |U_{bc}|)/3 \text{ und } |U_b| = (|U_{ab}| + 2|U_{bc}|)/3$$

in ein System von Strangspannungen umgerechnet werden. Zur Digitalisierung sind Analog-Digital-Wandler $ADC_a$ und $ADC_b$ vorgesehen. Über eine Strommeßeinheit wird zur Anpassung des Filters an die Netzverhältnisse auch der in der Filterinduktivität $L_F$ fließende Filterstrom $I_F$ gemessen und mittels eines weiteren Analog-Digital-Wandlers $ADC_F$ digitalisiert. Eine solche Strommeßeinheit 8, insbesondere ein Amperemeter, ist in den Darstellungen des Leistungsteils gemäß FIG 1 bzw. FIG 2 dargestellt.

Für eine Anpassung der Matrix der gemessenen Istspannungen $\underline{U}$ an die der Sollspannungen $\underline{U}_{ref} = (U^*_{aref})$ bei einphasigen System bzw. $\underline{U}_{ref} = (U^*_{aref}, U^*_{bref})$ bei dreiphasigen Systemen ist bezüglich einer netzsynchronen Arbeitsweise die Phasenlage $\varphi(U^*_a)$ bzw. $\varphi(U^*_a, U^*_b)$ zu ermitteln. Dabei bezeichnet $\varphi$ den Vektor der Absolutwinkel in bezug auf eine übergeordnete Zeitbasis. Dazu sind die gemessenen Spannungsistwerte $U^*_a$ ... zunächst durch eine geeignete Anordnung so zu glätten, daß ein genau definierter Phasennachhalt $\varphi$ entsteht. Eine mögliche Vorgehensweise hierzu besteht darin, zunächst über ein PT1-Glied die Spannungsistwerte $U^*_a$ ... hinreichend gut zu glätten. Dabei ist nur der durch das PT1-Glied verursachte Phasennachhalt $\varphi$ von Bedeutung, die Dämpfung der Amplituden ist bedeutungslos. Die Zeitkonstante des PT1-Gliedes sollte so gewählt werden, daß $\varphi$ exakt als ganzzahliges Vielfaches von 30° el. definiert ist.

Dieses geglättete Signal wird jeweils auf einen Schwellwertschalter gegeben, der lediglich die Vorzeichen der Spannungen ermittelt. Aus diesen so erzeugten und bei dreiphasigen Systemen um 120° el. phasenverschobenen Rechtecksignalen kann die Periodendauer (Frequenz) sowie die Phasenfolge des Dreiphasensystemes gewonnen werden. Durch intelligente Zuordnung der Phasen untereinander wird die Phasenrichtigkeit garantiert. Aus diesem geglätteten Signal wird die Phasenlage $\varphi(U^*_a)$ bzw. $\varphi(U^*_a, U^*_b)$ durch Erkennung der Nulldurchgänge ermittelt. Die so erhaltene Zeitfunktion entspricht dem Signum sgn (Vorzeichen) der Sollspannungen sgn $(U_{aref}^*)$ bei einphasigen Systemen bzw. sgn $(U_{aref}^*)$, sgn $(U_{bref}^*)$ bei dreiphasigen Systemen.

Das Signum der Sollspannungen sgn $(U_{aref}^*)$... dient als Triggersignal zum Bereitstellen einer Funktion $\underline{U}_{ref} = (U_{aref}^*)$ bei einphasigen System bzw. $\underline{U}_{ref} = (U_{aref}^*, U_{bref}^*)$ bei dreiphasigen Systemen von den Spannungsistwerten $U^*_a$ .... zugeordneten Spannungssollwerten, die bezüglich der Frequenz- und Phasenlage $\varphi$ exakt den Spannungsistwerten $U^*_a$ ... entsprechen. Bei Bedarf läßt sich hier ein zusätzlicher Phasenwinkel berücksichtigen. Die Amplitude des Wechselspannungssollverlaufs $\underline{U}_{ref}$ ist normiert auf die Einheitsamplitude. Die Form des Wechselspannungssollverlaufes $\underline{U}_{ref}$ entspricht der gewünschten und ist nicht verzerrt.

Die Glättung der gemessenen Spannungsistwerte $U^*_a$ ... mit genau definierter Phasenlage $\varphi$ wie die Vorgabe der Nulldurchgänge anhand des Signums der Sollspannungen sgn erfolgen in einem Schaltungselement 10, welches diskret in Form von Logikschaltkreisen aufgebaut sein kann oder aber auch durch ein geeignet programmiertes ASIC (anwenderspezifiziertes IC) bzw. durch einen geeignet programmierten Mikroprozessor bzw. digitalen Signalprozessor realisiert sein kann.

Mit den Signumsignalen sgn $(U_{aref}^*)$... wird ein Funktionsgenerator 11 angesteuert. Der Funktionsgenerator 11 kann auch ein in einem Speicherbereich eines digitalen Signalprozessors oder Mikroprozessors abgelegter Funktionsverlauf sein. Im vorliegenden Anwendungsfall des Ausführungsbeispiels werden die Amplituden einer Viertelperiode des gewünschten Spannungssignales (hier: Sinusfunktion) digital abgelegt. Die dem Signum der Sollspannung sgn $(U_{aref}^*)$... entsprechenden Rechtecksignale dienen als Triggerpunkte für das zyklische Auslesen des Speichers zur Vorgabe der Spannungssollwerte für eine Phase $U_{aref}^*$ bei einphasigen Systemen bzw. von zwei Phasen $U_{aref}^*$ und $U_{bref}^*$ bei dreiphasigen Systemen.

Die Filterinduktivität $L_F$ muß die Energie, die in der Differenz der Spannungs-Zeit-Flächen zwischen Wechselspannungsistverlauf $\underline{U}$ und Wechselspannungssollverlauf $\underline{U}_{ref}$ liegt, als Filterstrom $I_F$ speichern. Dabei steht ein $I_F$-Überschuß für einen zu großen Spannungsistwert, ein $I_F$-Defizit für einen zu kleinen Spannungsistwert. Der Anstieg des Filterstroms $I_F$ ist somit auch ein Maß für die Spannungsebene des Netzes. Die Spannungsdifferenz $\Delta \underline{U}$ wird einerseits durch vorhandene Spannungsoberschwingungen verursacht, andererseits ist sie eine Funktion der Betriebsweise, in der sich das Netz gerade befindet (d.h. ob Ein- oder Rückspeisebetrieb vorliegt). Bei Einspeisebetrieb entsteht niedrigeres Spannungsniveau am Netzanschlußpunkt NA bzw. NA3 bezogen auf den/die Einspeisepunkte des Generators G bzw. G3. Bei Rückspeisebetrieb entsteht ein Anstieg des Spannungsniveaus am Netzanschlußpunkt NA bzw. NA3 bezogen auf den/die Einspeisepunkte. Der Filterstrom $I_F$ ist somit ein Maß für diese Spannungsdifferenzen $\underline{\Delta U}$.

In einer Verarbeitungseinheit 20, welche auf die gleiche Art und Weise wie die Verarbeitungseinheit 10 realisiert sein kann, wird ein Faktor $k_F$ zur Sollwertkonditionierung bestimmt. Dazu wird der gemessene Filterstrom $I_F$ mittels eines Analog-Digital-Wandlers $ADC_F$ digitalisiert und über ein Verzögerungsglied 21 mit der Zeitkonstante $\tau_F$ geglättet. $\tau_F$ ist in Abhängigkeit der Grenzfrequenz $f_F$ des Filters zu wählen, wobei gilt: $\tau_F = 1/f_F$. Ein großes $\tau_F$ bewirkt, daß selbst Oberschwingungen sehr geringer Frequenz noch durch das Filter berücksichtigt werden. Dies erhöht jedoch den Filterstrom $I_F$ (und damit auch die Induktivität $L_F$). Ein kleineres $\tau_F$ bewirkt, daß niederfrequente Harmonische nicht mehr ausgeregelt werden, stattdessen jedoch geringere Filterströme $I_F$ fließen. Zur Anpassung der Filtereigenschaften in bezug auf die zu berücksichtigende Harmonische an die Verhältnisse vom Netzanschlußpunkt NA bzw. NA3 kann auf diese Art und Weise die Grenzfrequenz $f_F$ des Filters festgelegt werden, ab der die Filtereigenschaften wirken. Mit $f_F$ läßt sich somit die Güte der geregelten Spannung $\underline{U}$ bestimmen.

Um die Bauelemente des Filters vor einem zu hohen Filterstrom $I_F$ durch ein geeignetes Regelungsverfahren bzw. eine geeignete Regeleinrichtung zu schützen, wird der Filterstrom $I_F$ mit einem Filterstromsollwert $I_{Fref}$ verglichen. Mit $I_{Fref}$ kann man den gewünschten mittleren Filterstrom festlegen. Da der Filterstrom $I_F$ ein Maß für die Güte des Filters darstellt, gilt, daß ein kleiner $I_{Fref}$ nur möglich ist, wenn niederfrequente Harmonische nicht gefiltert werden sollen. Die so ermittelte Differenz der $\Delta I_F = I_{Fref} - I_F$ wird invertiert. Aus $-\Delta I_F$ wird ein Konditionierungsfaktor $k_F$ gebildet. Diese Operationen werden über entsprechende Schaltglieder 22, 23 und 24 vorgenommen. Mittels des Konditionierungsfaktors $k_F$ werden die im Funktionsgenerator 11 erzeugten unkonditionierten Spannungssollwerte $\underline{U}_{ref}$ durch Multiplikation mit dem Konditionierungsfaktor $k_F$ konditioniert: $|\underline{U}_{ref}{}^+| = k_F |U_{ref}{}^*|$. Es gilt für $\Delta I_F = 0$: $k_F = 1$, d.h. die generierte Amplitude $|\underline{U}_{ref}|$ bleibt bestehen. Bei $\Delta I_F > 0$ ($I_F < I_{Fref}$) wird die Amplitude von $\underline{U}_{ref}$ durch $k_F < 1$ etwas abgesenkt. Bei $\Delta I_F < 0$ ($I_F > I_{Fref}$) wird durch $k_F > 1$ die Ampltide $|\underline{U}_{ref}|$ erhöht. Die Multiplikation mit dem Konditionierungsfaktor $k_F$ erfolgt bei einem Einphasen-Wechselspannungssystem mit dem Spannungssollwert $U_{aref}{}^*$ in einem Multiplikator 12. In einem Dreiphasen-Wechselspannungssystem wird der Konditionierungsfaktor $k_F$ in je einem Multiplikator 12 und 13 mit den Spannungssollwerten $U_{aref}{}^*$ und $U_{bref}{}^*$ multipliziert.

Somit ist gewährleistet, daß unabhängig vom Spannungsniveau am Netzanschlußpunkt NA bzw. NA3 immer die optimale Amplitude der Sollspannungen vorgegeben wird. Weiterhin werden nur Harmonische ausgeregelt, für die gilt: $f_h > f_F = 1/\tau_F$ (h bezeichnet die Ordnungszahl der Harmonischen).

Der oder die konditionierten Spannungssollwerte $U_{aref}+$ bei einphasigen Systemen bzw. $U_{aref}+$ und $U_{bref}+$ bei dreiphasigen Systemen werden mit dem oder den gemessenen Istwerten $U^*_a$ bei einphasigen Systemen bzw. $U^*_a$ und $U^*_b$ bei dreiphasigen Systemen in Differenzstufen 14 bzw. 14 und 15 verglichen. Durch eine Rechenoperation wird bei dreiphasigen Systemen die Abweichung $\Delta U_c = \Delta U_a - \Delta U_b$ in einem entsprechenden Rechenglied 16 gebildet. In Abhängigkeit der Signa (Vorzeichen) der Abweichungen der Spannungswerte $\underline{\Delta U}$ werden in einer logischen Einheit 30 die bereits erwähnten Ansteuerimpulse ($\underline{A},\underline{B}$) bei einphasigen Systemen bzw. ($\underline{A},\underline{B},\underline{C}$) bei dreiphasigen Systemen für die Stromrichterventile generiert. Somit sind eventuelle Meß- oder Digitalisierungsfehler bei den Spannungsistwerten $\underline{U}$ von untergeordneter Bedeutung, solange sie keinen statischen Fehler erzeugen. Die logische Einheit 30 kann ebenfalls in Form diskreter Logikgatter aber auch in Form eines geeignet Programmierten ASIC-Bausteines bzw. geeignet programmierten Mikroprozessors oder digitalen Signalprozessors realisiert werden.

Wie bereits an vorangehender Stelle erwähnt wurde, gibt es bei einphasigen Systemen somit zwei sinnvolle Ansteuerzustände ($\underline{A},\underline{B}$), bei dreiphasigen Systemen sechs sinnvolle Spannungszustände ($\underline{A},\underline{B},\underline{C}$). Jedem Spannungszustand $\underline{\Delta U}$ ist somit eindeutig ein Schaltzustand der Stromrichterventile zugeordnet. In der folgenden Aufstellung sind die notwendigen Stromrichterventil-Ansteuersignale bei dreiphasigen Systemen aufgelistet.

| Zustand | Ventilsteuerung | | |
|---|---|---|---|
| $U_a < U_{aref}$, $U_b < U_{bref}$, $U_c > U_{cref}$ | A+:=ON, | B+:=ON, | C+:=OFF |
| | A-:=OFF, | B-:=OFF, | C-:=ON |
| $U_a > U_{aref}$, $U_b > U_{bref}$, $U_c < U_{cref}$ | A+:=OFF, | B+:=OFF, | C+:=ON |
| | A-:=ON, | B-:=ON, | C-:=OFF |
| $U_a < U_{aref}$, $U_b > U_{bref}$, $U_c < U_{cref}$ | A+:=ON, | B+:=OFF, | C+:=ON |
| | A-:=OFF, | B-:=ON, | C-:=OFF |

(fortgesetzt)

| Zustand | Ventilsteuerung | | |
|---|---|---|---|
| $U_a<U_{aref}$, $U_b>U_{bref}$, $U_c>U_{cref}$ | A+:=ON, | B+:=OFF, | C+:=OFF |
| | A-:=OFF, | B-:=ON, | C-:=ON |
| $U_a>U_{aref}$, $U_b<U_{bref}$, $U_c>U_{cref}$ | A+:=OFF, | B+:=ON, | C+:=OFF |
| | A-:=ON, | B-:=OFF, | C-:=ON |
| $U_a>U_{aref}$, $U_b<U_{bref}$, $U_c<U_{cref}$ | A+:=OFF, | B+:=ON, | C+:=ON |
| | A-:=ON, | B-:=OFF, | C-:=OFF |

Die Stromrichterventile sind dauerhaft anzusteuern, solange der zugehörige Zustand gültig ist. Bei Änderung der Netzspannungen sind die Stromrichterventile gemäß dem danach gültigen Zustand anzusteuern. Somit muß das Wechseln von jedem in jeden Zustand möglich sein. Die Umschaltung in einen neuen Zustand erfolgt, wenn sowohl die entsprechenden Spannungen die jeweiligen Bedingungen erfüllen, als auch die minimale Wartezeit $T_{min}$ vergangen ist. Es ist jedoch sicherzustellen, daß im Gegensatz zu den üblichen Ansteuerlogikgattern hier bei jedem Schaltzustandswechsel ($I_F$-Kommutierung von einem komplementären Stromrichterventilpaar in den nächsten) mindestens zwei Stromrichterventile gleichzeitig eingeschaltet sind (bei Schaltung mit einer Kapazität auf der Gleichstromseite sind es maximal zwei Stromrichterventile).

Für den Fall eines einphasigen Systemes lauten die notwendigen Ansteuerimpulse (A,B) für den Fall einer Spannungsüberhöhung: A+=OFF, A-=ON, B+=ON, B-=OFF. Im Fall einer Spannungsunterschreitung lauten die Ansteuerimpulse: A+=ON, A-=OFF, B+=OFF, B-=ON.

Ergänzend lassen sich auch Maßnahmen zur Schadensverhinderung bei Überschreitung des Filterstromes $I_F$ über gewisse Maxima $I_{Fmax}$ sowie bei unterschreitung der Betriebsspannung $U_B$ unter ein Minimum $U_{Bmin}$ berücksichtigen. Dabei wird garantiert, daß bei $I_F>I_{Fmax}$ und $U_B<U_{Bmin}$ die Stromrichterventile eines Komplementärzweiges solange eingeschaltet werden, bis der Filterstrom $I_F$=0 ist.

Es sind unter anderem drei Notfunktionsniveaus vorstellbar. Bei einer nur geringen Überhöhung des Filterstromes $I_F$ ($I_F>I_{Fmax1}$) wird durch direktes Aufschalten eines höheren Konditionierfaktors $k_F$ die Amplitude $|U_{ref}*|$ weiter angehoben und so der Filterstrom $I_F$ reduziert. Bei einer deutlichen Überhöhung von $I_F$ ($I_F>>I_{Fmax1}$) wird die im vorangehenden beschriebene Logik des Zustandsautomaten 30 zur Bereitstellung von Ansteuerimpulsen (A,B) bzw. (A,B,C) invertiert. Dadurch wird das Filterverhalten zwar verschlechtert, jedoch wird der Filterstrom $I_F$ dadurch ausreichend stark reduziert. Überschreitet der Filterstrom $I_F$ den maximal zulässigen Wert, d.h. er gelangt in den Bereich der Sättigung der Filterinduktivität $L_F$ ($I_F>I_{FMax2}$), so wird durch ein von einem mit dem $I_F$-Signal gekoppelten Schwellwertschalter 41 generiertes binäres Alarmsignal das gleichzeitige Einschalten zweier komplementärer Stromrichterventile (z.B. A+ und A-) veranlaßt, wodurch das Filter vom Netz abgeschaltet wird und die Filterinduktivität $L_F$ kurzgeschlossen wird bis der Filterstrom $I_F$=0 ist. Für den Fall $U_B<U_{Bmin}$ gilt das gleiche wie für $I_F>I_{Fmax2}$, wobei hierfür ein weiterer Schwellwertschalter 40 vorgesehen ist. Die geschilderten Notfunktionen werden über eine in den Darstellungen gemäß FIG 3 und FIG 4 gezeigte geeignete Logikeinheit 25 realisiert.

Durch das beschriebene Funktionsprinzip wird gesichert, daß der aktive Filter weltweit an jedem Netz, unabhängig von der Spannungsebene, der Frequenz (50 bzw. 60 Hz) und der Drehrichtung bei dreiphasigen Systemen weitgehend automatisch betrieben werden kann. Auf Schwankungen der Netzfrequenz wird automatisch mit einer Netzperiodendauerverzögerung reagiert (Erkennung durch die Ermittlung der Nulldurchgänge). Auf Schwankungen der Netzspannungsamplitude und Veränderungen der Betriebsverhältnisse wird durch Auswertung des Filterstromes $I_F$ automatisch reagiert. Das Funktionsprinzip ist geeignet, jede beliebige am Netzanschlußpunkt NA bzw. NA3 vorhandene Spannungsform in jede beliebige andere, eventuell von der Sinusform abweichende, gewünschte Spannungsform zu wandeln.

Dabei sollten folgende Bedingungen eingehalten werden: Die Energiebilanz zwischen Wechselspannungsistverlauf $U$ und dem Wechselspannungssollverlauf $U_{ref}$ muß erfüllt sein (d.h. die Summe aller positiven $\Delta U$ muß gleich sein der Summe aller negativen $\Delta U$). Die Dimensionierung der leistungselektronischen Elemente sowie der Speicherbauelemente des Steuerteils S bzw. S3 ist anzupassen. Die gewünschte Wechselspannungssollform muß im Steuerteil S bzw. S3, insbesondere im Funktionsgenerator 11 abgelegt sein.

Zur Realisierung der in den Darstellungen gemäß FIG 1 bis FIG 4 gezeigten Schaltungsanordnungen stehen prinzipiell unter anderem drei Realisierungsmöglichkeiten.

Eine Realisierung mit einem Multichip-Digital-Signalprozessor, d.h. mit integriertem digitalen Signalprozessor-Kern mit Hardwaremultiplizierer, mit Analog-Digital-Wandlern und Hardware-Logik-Gattern. Der Vorteil besteht darin, daß nahezu alle Funktionen auf einem einzigen integrierten Schaltkreis implementiert werden können. Diese Lösung ist kostengünstig, relativ störungsunempfindlich und einfach. Alle im vorangehenden genannten Funktionen können entweder in Software oder unter Nutzung der meist auf solchen Chips schon integrierten Hardwaremodule (Logik-Gatter, Dimmer, teilweise Funktionsgeneratoren, Pulsweitenmodulator etc.) realisiert werden.

Eine weitere Realisierungsform besteht in einem echten digitalen Signalprozessor und einem separaten Analog-Digital-Wandler. Somit sind mehrere digitale Einheiten notwendig. Eine solche Variante kann jedoch aus Verfügbarkeitsgründen oder aufgrund strenger Echtzeitanforderungen zu favorisieren sein.

Eine dritte Realisierungsmöglichkeit besteht in einem Aufbau aus diskreten analogen Baugruppen.

Das im vorangehenden als vorteilhaftes Ausführungsbeispiel beschriebene aktive Filter kann beispielsweise im Rahmen einer numerisch gesteuerten Werkzeugmaschine die durch eine Reihe von elektrischen Stromrichterantrieben verursachten Netzstörungen filtern. Vorstellbar ist jedoch auch eine Anwendung des aktiven Filters an einem zentralen Abgriffspunkt wie z.B. an einem Fabrikeingang. Auf diese Weise lassen sich alle in der Fabrikhalle verursachten Netzstörungen filtern. Voraussetzung hierfür ist selbstverständlich ein genügend großer Energiespeicher. Theoretisch ist auch eine Anwendung zentral am Elektrizitätswerk vorstellbar.

Die vorangehende Beschreibung zweier bevorzugter Ausführungsformen auf dem Anwendungsgebiet der aktiven Filterung von Spannungen eines elektrischen Drehstrom- oder Wechselstromversorgungsnetzes ist zum Zwecke der Veranschaulichung gegeben. Diese ist nicht erschöpfend. Auch ist die Erfindung nicht auf die genaue angegebene Form beschränkt, sondern es sind zahlreiche Modifikationen und Änderungen im Rahmen der vorstehend angegebenen technischen Lehre möglich. Zwei bevorzugte Ausführungsformen wurden gewählt und beschrieben, um die prinzipiellen Details der Erfindung und die praktische Anwendung zu verdeutlichen sowie um den Fachmann in die Lage zu versetzen, die Erfindung zu realisieren. Eine Vielzahl bevorzugter Ausführungsformen sowie weitere Modifikationen jenseits der Filterproblematik von Spannungen in Elektroenergieversorgungsnetzen kommen z.B. in der Elektronik in Betracht. Prinzipiell ist eine Wechselspannungsformung eines beliebigen Wechselspannungsistverlaufes in einer beliebigen Wechselspannungssollverlauf möglich.

## Patentansprüche

1. Verfahren zur Wechselspannungsformung eines Wechselspannungsistverlaufes ($\underline{U}$) in einen Wechselspannungssollverlauf ($\underline{U}_{ref}$) mit folgenden Verfahrensschritten:

   1.1 in Abweichungen ($\Delta\underline{U}$) des Wechselspannungsistverlaufes ($\underline{U}$) von dem Wechselspannungssollverlauf ($\underline{U}_{ref}$) enthaltene elektrische Energie wird bei Spannungsüberhöhung ($U>U_{ref}$) einem Stromspeicher ($L_F$) zugeführt und bei Spannungsunterschreitung ($U<U_{ref}$) vom Stromspeicher ($L_F$) abgegeben,

   1.2 indem in Abhängigkeit einer Spannungsüberhöhung ($U>U_{ref}$) oder einer Spannungsunterschreitung ($U<U_{ref}$) Stromrichterventile (A+,A-,B+..) so angesteuert werden, daß keine feste Schaltfrequenz entsteht, wobei Ansteuerimpulse ($\underline{A},\underline{B}$...) gewonnen werden,

   1.3 indem mindestens ein Spannungsistwert ($U_a{}^*$...) und ein im Stromspeicher ($L_F$) fließender Strom ($I_F$) bestimmt werden,

   1.4 durch Aufbereitung des/der bestimmten Spannungsistwerte ($U_a{}^*$...) diesem/diesen zugeordnete dem Wechselspannungssollverlauf ($\underline{U}_{ref}$) entsprechende Spannungssollwerte ($U_{aref}{}^*$...) generiert werden,

   1.5 ein Faktor ($k_F$) zur Konditionierung des/der Spannungssollwerte ($U_{aref}{}^*$...) in Abhängigkeit des im Stromspeicher ($L_F$) fließenden Stromes ($I_F$) bereitgestellt wird,

   1.6 anhand von Abweichungen des/der konditionierten Spannungssollwerte ($U_{aref}{}^+$...) von dem/den Spannungsistwerten ($U_a{}^*$...) mittels logischer Operationen die jeweiligen Ansteuerimpulse ($\underline{A},\underline{B}$...) für die zugeordneten Stromrichterventile (A+,A-,B+..) bereitgestellt werden.

2. Verfahren nach Anspruch 1, mit folgendem weiteren Verfahrensschritt:

   2.1 es werden stets mindestens ein positives (A+,B+...) und ein negatives (A-,B-...) Stromrichterventil gleichzeitig eingeschaltet.

3. Verfahren nach Anspruch 1 oder 2, mit folgendem weiteren Verfahrensschritt:

   3.1 der durch den Stromspeicher ($L_F$) fließende Strom ($I_F$) wird auf Überschreitung eines maximal zulässigen Stromes ($I_{Fmax}$) überwacht und im Falle einer Überschreitung wird der durch den Stromspeicher ($L_F$) fließende Strom ($I_F$) durch eine Vergrößerung des Faktors ($k_F$) zur Konditionierung begrenzt.

4. Verfahren nach einem der vorangehenden Ansprüche, mit folgendem weiteren Verfahrensschritt:

4.1 bei einer erheblichen Überschreitung des maximal zulässigen Stromes ($I_{Fmax}$) im Stromspeicher ($L_F$) werden die Ansteuerimpulse ($\underline{A},\underline{B}$...) für die Stromrichterventile (A+, A-,B+..) invertiert oder zwei komplementäre Stromrichterventile (A+,A- etc.) gleichzeitig eingeschaltet.

5. Verfahren nach einem der vorangehenden Ansprüche, mit folgendem weiteren Verfahrensschritt:

5.1 bei einer Unterschreitung eines minimal zulässigen Wertes ($U_{Bmin}$) durch die Betriebsspannung ($U_B$) werden zwei komplementäre Stromrichterventile (A+,A- etc) gleichzeitig eingeschaltet.

6. Verfahren nach einem der vorangehenden Ansprüche, mit folgendem weiteren Verfahrensschritt:

6.1 zur Generierung entsprechender Spannungssollwerte ($U_{aref}{}^*$...) werden die zugeordneten Spannungsistwerte ($U_a{}^*$...) geglättet, um einen festen Phasenwinkel ($\varphi$) gedreht und mittels Bestimmung der Nulldurchgänge ($sgn(U_{aref}{}^*)$...) der Spannungsistwerte ($U_a{}^*$...) mit diesen phasensynchronisierte Spannungssollwerte ($U_{aref}{}^*$...) abgeleitet.

7. Verfahren nach einem der vorangehenden Ansprüche, mit folgenden weiteren Verfahrensschritten:

7.1 die Istwechselspannung ($\underline{U}$) wird zu einem Element oder einer Gruppe von Elementen ($C_F$) zur Speicherung der Wechselspannung geführt,
7.2 die in dem Element oder der Gruppe von Elementen ($C_F$) im Falle einer Spannungsüberhöhung ($U>U_{ref}$) gespeicherte überschüssige Energie wird durch einen über die Stromrichterventile (A+,A-,B+..) in einen Gleichstrom gewandelten Wechselstrom in einem Gleichstromspeicherelement zwischengespeichert und die im Falle einer Spannungsunterschreitung ($U<U_{ref}$) fehlende Energie an das Element oder die Gruppe von Elementen ($C_F$) abgegeben.

8. Verwendung des Verfahrens nach einem der vorangehenden Ansprüche zur aktiven Filterung von Wechselspannungen, wobei als Wechselspannungssollverlauf ($\underline{U}_{ref}$) der ideale ungestörte Verlauf der Wechselspannung zugrundegelegt wird.

9. Verwendung des Verfahrens nach einem der vorangehenden Ansprüche zur aktiven Filterung der Spannungen eines ein- oder mehrphasigen elektrischen Wechselstromversorgungsnetzes, wobei als Wechselspannungssollverlauf ($\underline{U}_{ref}$) der ideale ungestörte Verlauf der vom Wechselstromversorgungsnetz zu liefernden Wechselspannung zugrundegelegt wird.

10. Schaltungsanordnung zur Wechselspannungsformung eines Wechselspannungsistverlaufes ($\underline{U}$) in einen Wechselspannungssollverlauf ($\underline{U}_{ref}$) mit folgenden Merkmalen:

10.1 mindestens einem Stromspeicher ($L_F$) zur Aufnahme von in Abweichungen ($\Delta\underline{U}$) des Wechselspannungsistverlaufes ($\underline{U}$) von dem Wechselspannungssollverlauf ($\underline{U}_{ref}$) enthaltener elektrische Energie bei Spannungsüberhöhung ($U>U_{ref}$) und zur Abgabe dieser Energie bei Spannungsunterschreitung ($U<U_{ref}$),
10.2 Stromrichterventilen (A+,A-,B+..), welche durch zugeordnete Ansteuerimpulse ($\underline{A},\underline{B}$...) in Abhängigkeit einer Spannungsüberhöhung ($U>U_{ref}$) oder einer Spannungsunterschreitung ($U<U_{ref}$) so ansteuerbar sind, daß keine feste Schaltfrequenz entsteht,
10.3 Mitteln (6,7,8) zur Bestimmung von mindestens einem Spannungsistwert ($U_a{}^*$...) und einem im Stromspeicher ($L_F$) fließenden Strom ($I_F$),
10.4 Mitteln (10,11) zur Generierung von dem Wechselspannungssollverlauf ($\underline{U}_{ref}$) entsprechenden zugeordneten Spannungssollwerten ($U_{aref}{}^*$...) durch Aufbereitung des/der bestimmten Spannungsistwerte ($U_a{}^*$...),
10.5 Mitteln (20...24) zur Bereitstellung eines Faktors ($k_F$) zur Konditionierung des/der Spannungssollwerte ($U_{aref}{}^*$...) in Abhängigkeit des im Stromspeicher ($L_F$) fließenden Stromes ($I_F$),
10.6 Mitteln (12...16,30) zur Bereitstellung von jeweiligen Ansteuerimpulsen ($\underline{A},\underline{B}$...) für die zugeordneten Stromrichterventile (A+,A-,B+..) anhand von Abweichungen des/der konditionierten Spannungssollwerte ($U_{aref}{}^*$...) von dem/den Spannungsistwerten ($U_a{}^*$...) mittels logischer Operationen.

11. Aktives Filter mit einer Schaltungsanordnung nach Anspruch 10, wobei als Wechselspannungssollverlauf ($\underline{U}_{ref}$) der ideale ungestörte Verlauf der Wechselspannung zugrundegelegt ist.

12. Aktives Filter mit einer Schaltungsanordnung nach Anspruch 10 oder 11, wobei der Stromspeicher ($L_F$) als induktiver Speicher, die Stromrichterventile (A+,A-,B+..) als Transistoren und die Mittel zur Generierung (10,11) von Spannungssollwerten ($U_{aref}^*$...), zur Bereitstellung (20...24) eines Konditionierfaktors ($k_F$) sowie zur Bereitstellung (12...16,30) von jeweiligen Ansteuerimpulsen (A,B...) als Logikschaltkreise und/oder anwenderspezifizierter Logikschaltkreis und/oder ein geeignet programmierter Mikroprozessor oder Signalprozessor ausgeprägt sind.

FIG 1

FIG 2

EP 0 865 138 A1

EP 0 865 138 A1

$U_a^*$

$\underline{A}, \underline{B}$

$U_B$    $I_F$    $I_F$

40    41    $ADC_F$

$ADC_a$

$A+B+$
$A-B-$

$U_B$    $I_F > I_{Fmax2}$    $I_F$

**25**

$U_a^*$

**30**

$(A+... B-)=f(\Delta U_a <> 0)$
$inv\ (A+... B-)=f(I_F >> I_{Fmax1})$
$(A+A-)\ |\ (B+B-)$
$=f(I_F >> I_{Fmax2}\ |\ U_B < U_{Bmin})$

$U_B$    $I_F$    $I_F$

$\dfrac{1}{1+p\tau_F}$    $\tau_F$    **21**

$-$    $+$    $I_{Fref}$

$\Delta U_a$

$I_F >> I_{Fmax2}\ |$    $I_F >> F_{Fmax1}$    $I_F > F_{Fmax1}$
$U_B < U_{Bmin}$

**22**

$k_{Anp}$    **23**

$sgn(U_{aref}^*)$

**10**

$+$    $+$    $k_{Fref}$

**24**

$U_a^*$

**14**

$-$    $+$

**11**

**20**

$k_F$

$U_{aref}^+$

$U_{aref}^*$

**12**

$U_{aref}^+ = k_F(I_F) \cdot U_{aref}^*$

**FIG 3**

$S$

FIG 4

EP 0 865 138 A1

Europäisches
Patentamt

**EUROPÄISCHER RECHERCHENBERICHT**

Nummer der Anmeldung

EP 97 10 3946

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | POWER ELECTRONICS, MAUI, NOV. 15 - 19, 1993, Bd. 2, 15.November 1993, INSTITUTE OF ELECTRICAL AND ELECTRONICS ENGINEERS, Seiten 1093-1098, XP000428207 PINHEIRO H ET AL: "A SIMPLE CONTROL STRATEGY FOR SHUNT POWER LINE CONDITIONER WITH INDUCTIVE ENERGY STORAGE" * das ganze Dokument * --- | 1,10 | H02J3/01 H02M1/12 |
| A | CONFERENCE RECORD OF THE INDUSTRY APPLICATIONS SOCIETY ANNUAL MEETING (IAS), PITTSBURGH, OCT. 2 - 7, 1988, Bd. PART 1, 2.Oktober 1988, INSTITUTE OF ELECTRICAL AND ELECTRONICS ENGINEERS, Seiten 837-842, XP000092113 YOICHI HAYASHI ET AL: "A NOVEL CONTROL OF A CURRENT SOURCE ACTIVE FILTER FOR AC POWER SYSTEM HARMONIC COMPENSATION" * das ganze Dokument * ----- | 1,10 | |

RECHERCHIERTE SACHGEBIETE (Int.Cl.6)

H02J
H02M

Der vorliegende Recherchenbericht wurde für alle Patentansprüche erstellt

| Recherchenort | Abschlußdatum der Recherche | Prüfer |
|---|---|---|
| DEN HAAG | 3.Juni 1997 | Gentili, L |